# EUROPEAN PATENT SPECIFICATION

(11) **EP 3 778 362 B1**
(45) Date of publication and mention of the grant of the patent: **06.09.2023**
(21) Application number: 19775303.1
(22) Date of filing: 22.03.2019
(51) Int. Cl.: B62J 45/00, H01R 24/60, B62J 9/12, H01R 13/74, H01R 13/52, B62J 17/06

(54) **USB TERMINAL UNIT STRUCTURE FOR SADDLE RIDING-TYPE VEHICLE**
USB-ANSCHLUSSEINHEITSSTRUKTUR FÜR EIN SATTELFAHRZEUG
STRUCTURE D'UNITÉ DE BORNE USB POUR VÉHICULE DE TYPE À SELLE

(30) Priority: 29.03.2018 JP 2018064810
(43) Date of publication of application: 17.02.2021
(73) Proprietor: HONDA MOTOR CO., LTD., Minato-ku Tokyo 107-8556 (JP); Japan Aviation Electronics Industry, Limited, Tokyo 150-0043 (JP)
(72) Inventor: SENOKUCHI Yuta, Wako-shi, Saitama 351-0193 (JP); KITAMURA Ryohei, Wako-shi, Saitama 351-0193 (JP); HATTORI Makoto, Wako-shi, Saitama 351-0193 (JP); NAKAMURA Kazunobu, Tokyo 150-0043 (JP)
(74) Representative: Kiwit, Benedikt
(86) International application number: PCT/JP2019/012096
(87) International publication number: WO 2019/188784

(56) References cited:
- WO-A1-2015/059730
- CN-A- 105 390 852
- CN-U- 203 228 888
- JP-A- 2013 016 288
- JP-A- 2013 016 288
- JP-A- 2015 211 433
- US-A1- 2015 325 946
- US-B2- 8 323 050

## Description

### [Technical Field]

The present invention relates to a USB terminal unit structure for a saddle riding-type vehicle.

### [Background Art]

In the related art, a saddle riding-type vehicle is known in which an inner box that can accommodate an article is provided on a rear side (inside) of a leg shield disposed in front of a leg of a driver, and in which an accessory socket (so-called cigar socket) for power supply is provided inside the inner box (for example, refer to Japanese Patent No. JP 5 965 055 B2). The accessory socket has a cylindrical shape. A corresponding plug can be inserted into and removed from the accessory socket along an axial direction. The axial direction (insertion-removal direction) of the accessory socket is inclined upward. The accessory socket is disposed so that an axis of the accessory socket passes through an opening of the inner box. In this manner, the plug is likely to be inserted into and removed from the accessory socket through the opening.

CN 105 390 852 A shows a USB connector fixing device according to the preamble of claim 1.

### [Summary of Invention]

### [Technical Problem]

In a case where a mobile device such as a smartphone is connected to the above-described accessory socket by using a USB connector, an adapter corresponding to a USB plug on the device side is attached to the accessory socket. However, the attachment of the device is complicated. In addition, it is desirable that the accessory socket can be used for various communication purposes in addition to a power supply purpose. Therefore, there is a demand for installing a USB port (terminal unit) serving as a socket on the vehicle side. However, particularly in the saddle riding-type vehicle, the USB plug may be attached and detached with a glove wearing hand, or may be attached and detached outdoors in some cases. Accordingly, it is required to provide a structure that sufficiently considers the protection performance of the USB port.

According to an aspect of the present invention, there is provided a USB terminal unit structure for a saddle riding-type vehicle, which can improve the protection performance of a USB terminal unit connecting a connection terminal of an external device.

### [Solution to Problem]

According to an aspect of the present invention, there is provided a USB terminal unit structure for a saddle riding-type vehicle. The USB terminal unit structure includes a USB terminal unit (52) which has at least one of a power supply function and a communication function, and through which a connection terminal (51) of an external device is insertable and removable along a predetermined insertion-removal direction (W1). The USB terminal unit (52) includes a casing (55) in which an attachment portion to a vehicle body side (59) is provided. The casing (55) includes a protruding portion (58) which protrudes toward a removal side in the insertion-removal direction (W1) from a terminal connection port (53) through which the connection terminal (51) is insertable and removable.

According to this configuration, in a case where a position at which the connection terminal of the external device is inserted into the terminal connection port of the USB terminal unit is misaligned, the inserted connection terminal is stopped by abutting against the protruding portion of the casing instead of the terminal connection port. Therefore, even when the connection terminal is pushed and inserted into the USB terminal unit, a load acting on an insertion side in the insertion-removal direction is input to the vehicle body side via the casing. Therefore, when the connection terminal is inserted, the load input to a terminal periphery of the USB terminal unit is suppressed, and the protection performance of the USB terminal unit can be improved.

In the USB terminal unit structure for above-described saddle riding-type vehicle, the protruding portion (58) is provided to surround an outer periphery of the terminal connection port (53).

According to this configuration, the protruding portion is likely to disperse and receive an insertion load of the connection terminal, and is likely to withstand a large load input. Therefore, the protection performance of the USB terminal unit can be further improved.

In the USB terminal unit structure for above-described saddle riding-type vehicle, the protruding portion (58) may be provided to be adjacent to a peripheral edge of the terminal connection port (53) when viewed in the insertion-removal direction (W1). An inner peripheral side of the protruding portion (58) may include a guide portion (58a) formed to be separated farther from the peripheral edge of the terminal connection port (53) as the protruding portion (58) is closer to the removal side in the insertion-removal direction (W1).

According to this configuration, when the connection terminal is inserted into the terminal connection port, the guide portion guides the connection terminal toward the terminal connection port if the connection terminal is moved close to the terminal connection port. Therefore, the connection terminal can be easily inserted.

In the USB terminal unit structure for above-described saddle riding-type vehicle, in an end portion on an insertion side in the insertion-removal direction (W1), the protruding portion (58) includes a drainage portion (58b) which guides water entering an inside of the protruding portion (58) to an outside of the protruding portion (58).

According to this configuration, water is prevented from accumulating inside the protruding portion, and the water is less likely to enter the inside of the terminal connection port. In this manner, a waterproof property of the USB terminal unit can be improved.

### [Advantageous Effects of Invention]

According to the aspect of the present invention, it is possible to provide the USB terminal unit structure for the saddle riding-type vehicle, which can improve the protection performance of the USB terminal unit connecting the connection terminal of the external device.

### [Brief Description of Drawings]

Fig. 1 is a left side view of a motorcycle according to an embodiment of the present invention.
Fig. 2 is a rear view illustrating a periphery of a handlebar cover and leg shield of the above-described motorcycle.
Fig. 3 is a perspective view of a USB port.
Fig. 4 is a side view of the USB port including a cross section of a wall portion to which the USB port is attached.
Fig. 5 is a perspective view illustrating a state where the USB port is attached from a back side of the above-described wall portion.
Fig. 6 is a functional block diagram of the above-described USB port.
Fig. 7 is a functional block diagram of a modification example of the above-described USB port.

### [Description of Embodiments]

Hereinafter, an embodiment of the present invention will be described with reference to the drawings. Forward, rearward, rightward, and leftward directions in the following description are the same as directions in a vehicle described below unless otherwise specified. In addition, an arrow FR indicating a forward side of the vehicle, an arrow LH indicating a leftward side of the vehicle, an arrow UP indicating an upward side of the vehicle, and a line CL indicating a center of a vehicle body in a rightward-leftward direction are illustrated at appropriate locations in the drawings used in the following description.

### <Overall Vehicle>

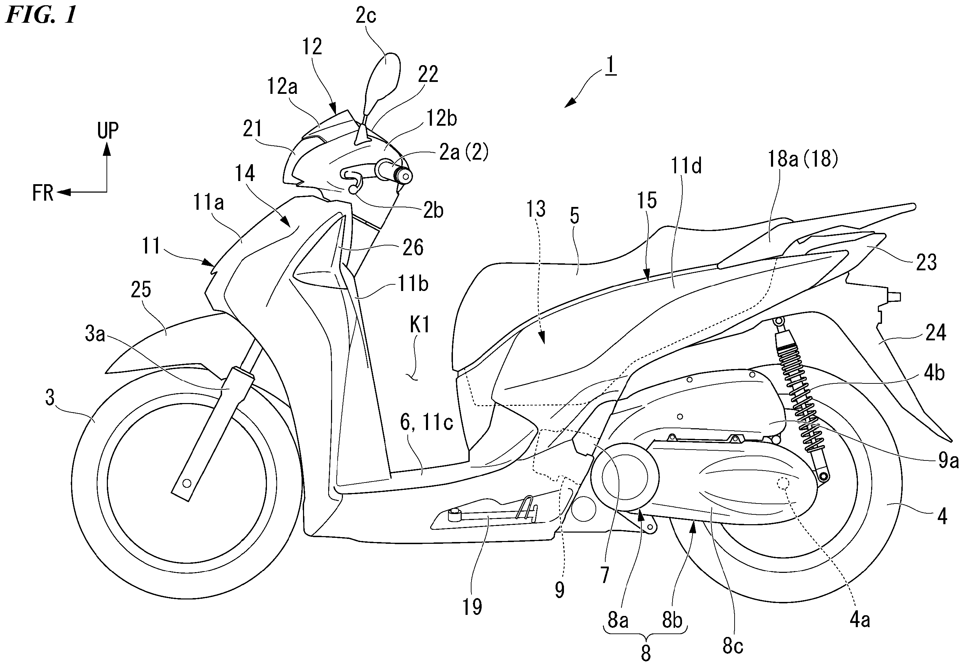

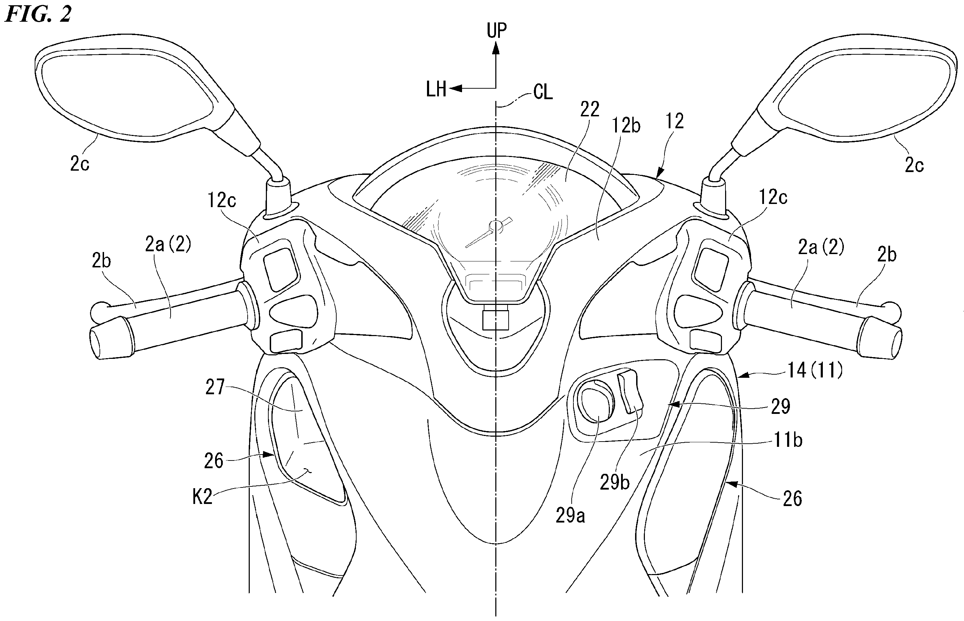

Fig. 1 illustrates a scooter-type motorcycle 1 as an example of a saddle riding-type vehicle. The motorcycle 1 includes a front wheel 3 that is a steering wheel, and a rear wheel 4 that is a driving wheel. The front wheel 3 is supported by a front fork 3a, and can be steered by a handlebar 2. In right and left grips 2a (refer to Fig. 2) of the handlebar 2, an accelerator grip is mounted on the right grip 2a. The rear wheel 4 is supported by a swing-type power unit 8, and can be driven by a power unit 8. In the drawing, a reference numeral 4a indicates a rear wheel axle, and a reference numeral 4b indicates a rear cushion.

Steering system components including the handlebar 2, the front fork 3a, and the front wheels 3 are supported by a front end portion of a vehicle body frame (not illustrated) so that the motorcycle 1 can be steered. A front portion of the power unit 8 is supported by a lower portion of the vehicle body frame such that the power unit 8 is swingable upward and downward.

A step floor 6 on which a driver puts his or her foot is provided between the front wheel 3 and the rear wheel 4. A leg shield 14 is provided in front of the step floor 6. A rear body 15 is provided behind the step floor 6.

A seat 5 on which an occupant sits is supported on the rear body 15. A space K1 (space above the step floor 6) between the handlebar 2 and the seat 5 is a straddling space K1 when the driver straddles a vehicle body. Both lower portion sides of the rear body 15 have a retractable pillion step 7 on which a rear passenger sitting on a rear portion of the seat 5 puts his or her foot. A lower left side of the step floor 6 has a retractable side stand 19 that can support the vehicle body in a standing state where the vehicle body is inclined leftward.

The power unit 8 includes an engine 8a which is an internal combustion engine, and a transmission device (for example, a belt-type continuously variable transmission) 8b that transmits a driving force generated by the engine 8a to the rear wheel 4.

The engine 8a has a crankshaft extending in a vehicle width direction (rightward-leftward direction). The engine 8a has a cylinder 9 that protrudes forward substantially horizontally (specifically, slightly upward) from a front end portion of a crankcase (not illustrated). An intake pipe (not illustrated) is connected to an upper portion (intake side) of the cylinder 9. An exhaust pipe (not illustrated) is connected to a lower portion (exhaust side) of the cylinder 9.

The transmission device 8b includes a transmission case 8c extending rearward from one side (left side) in the vehicle width direction of the crankcase. An air cleaner case 9a to which an upstream side of the intake pipe is connected is supported above the transmission case 8c.

A periphery of the vehicle body frame of the motorcycle 1 is covered with a vehicle body cover 11. The vehicle body cover 11 includes a front cover 11a that covers a front portion of the vehicle body frame from the front, an inner cover 1 1b that covers the front portion of the vehicle body frame from the rear, a floor cover 11c that covers a lower portion of the vehicle body frame from above, and a rear body cover 11d that covers a rear portion of the vehicle body frame from the front and the side. The front cover 11a and the inner cover 11b configure the leg shield 14 that covers a front part of a leg of the driver. The rear body cover 11d forms an outer surface of the rear body 15.

Referring to Fig. 2, a periphery of the handlebar 2 is covered with a handlebar cover 12.

The handlebar cover 12 includes a front handlebar cover 12a that covers the handlebar 2 from the front, and a rear handlebar cover 12b that covers the handlebar 2 from the rear. The handlebar cover 12 is pivotable with respect to the vehicle body frame and the body cover 11 together with the handlebar 2. A headlamp 21 is disposed in a central portion of the front handlebar cover 12a in the vehicle width direction. A meter unit 22 is disposed in a central portion of the rear handlebar cover 12b in the vehicle width direction.

Both sides of the rear handlebar cover 12b in the vehicle width direction have a pair of right and left switch boxes 12c that can be operated by the driver with hands gripping the right and left grips 2a of the handlebar 2.

The right and left switch boxes 12c are provided integrally with the handlebar cover 12, for example. The right and left switch boxes 12c may be provided separately from the handlebar cover 12. A pair of right and left operation levers (for example, front and rear brake levers) 2b that can be operated by the driver with the hands gripping the right and left grips 2a are disposed in front of the right and left grips 2a. A pair of right and left rearview mirrors 2c is supported by the handlebar 2 by penetrating both sides of the handlebar cover 12 in the vehicle width direction.

Referring to Fig. 1, a container-shaped luggage box 13 which is open upward is disposed inside the rear body cover 11d. The luggage box 13 can open and close an upper opening by pivoting around a front end portion of the seat 5. A rear carrier 18 including right and left rear grips 18a that can be gripped by a rear passenger is disposed behind the seat 5 in an upper rear portion of the rear body 15.

A rear combination lamp 23 is disposed in a rear end portion of the rear body 15. A rear fender 24 extends rearward and downward of the rear combination lamp 23. A front fender 25 pivots together with a steering system.

Referring to Figs. 1 and 2, both sides of the inside (rear side) of the leg shield 14 in the vehicle width direction have a pair of inner boxes 26 that can accommodate an article smaller than the luggage box 13.

Inside (on a rear side) of the leg shield 14, an ignition switch 29a, and a main switch 29 including an unlocking switch 29b of the seat 5 and the like are provided on one side (right side, the same side as the accelerator grip) in the vehicle width direction and inside the inner box 26 located on the same side in the vehicle width direction. The inner box 26 may be provided on only one side which is a side opposite to the main switch 29 (left side, the same side as the side stand 19) in the vehicle width direction.

### <USB Port>

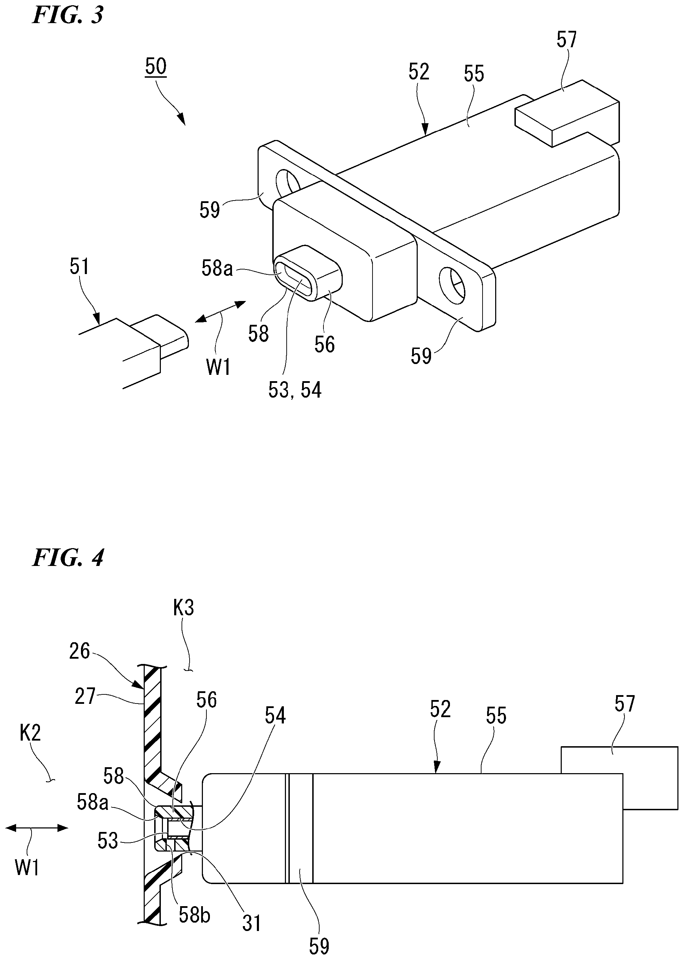

Referring to Fig. 3, the motorcycle 1 can connect an external device such as a smartphone by using a universal serial bus (USB) connector 50. The USB connector 50 is configured to include a USB plug (connection terminal) 51 on the external device side and a USB port (USB terminal unit) 52 serving as a socket on the vehicle side.

For example, the USB port 52 of the present embodiment has a power supply function and a communication function. For example, the USB port 52 has a port opening 53 (terminal connection port) disposed inside the inner box 26 on the left side of the leg shield 14. In this manner, the external device can be connected to the USB port 52 while the external device is accommodated in the inner box 26, or the external device can be connected to the USB port 52 while the external device is mounted around the handlebar 2.

As the USB connector 50, a USB connector corresponding to existing standards is adopted. Particularly in a case where a later-developed "USB Type-C" is adopted, the USB port 52 has a waterproof property suitable for the saddle riding-type vehicle, and power supply capability and communication capability are improved.

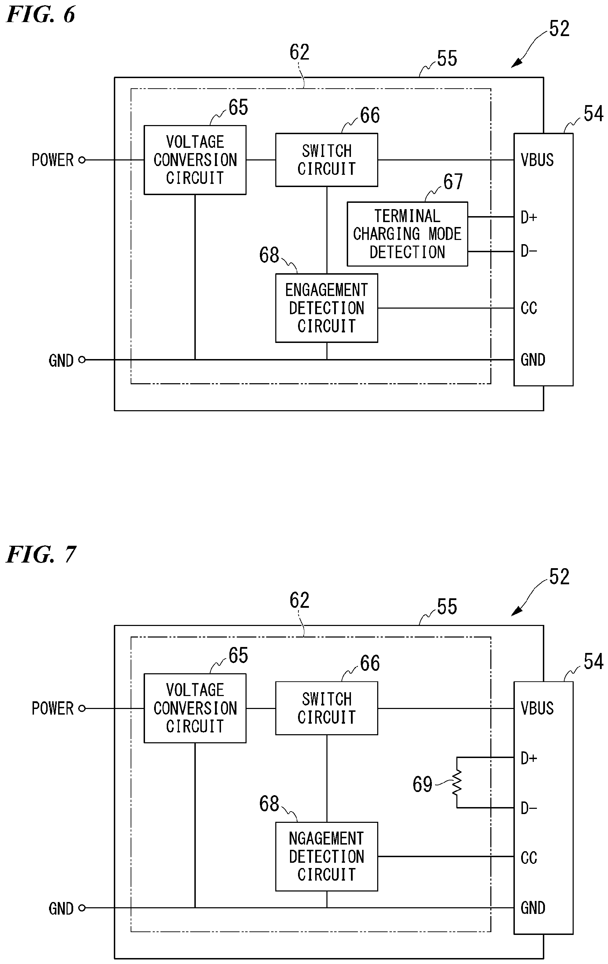

Figs. 6 and 7 illustrate a functional block diagram of the USB port 52.

Referring to Fig. 6, the USB port 52 includes a cap portion 54 and a casing 55.

Inside the cap portion 54, for example, five-pole terminals (VBUS, D-, D+, CC, and GND) are arranged. A circuit board 62 is accommodated inside the casing 55. The circuit board 62 includes a voltage conversion circuit unit 65 including a DC-DC converter, a switch circuit unit 66 that connects and disconnects a power supply and the terminal VBUS, a terminal charging mode detection unit 67 that extends across the terminals D- and D+, and an engagement detection circuit unit 68 that is connected to the terminal CC and the switch circuit unit 66, that detects the engagement of the USB plug 51 with the cap portion 54, and that performs opening and closing operation on the switch circuit unit 66. Instead of the terminal charging mode detection unit 67, a specified termination resistor 69 can also be used as illustrated in Fig. 7.

As illustrated in Figs. 6 and 7, in a case where the "USB Type-C" is used, the terminal CC is used. In this manner, a configuration may be adopted so that the switch circuit unit 66 is closed only when the terminal CC receives an input, and power is supplied from the vehicle body side. In the USB connector 50, when the power is always continuously supplied from the vehicle body side, the terminal may be electrically corroded in an environment exposed to water. However, the configuration is adopted so that the power is supplied from the vehicle body side only when the terminal CC receives the input. In this manner, the terminal can also be disposed in an outward exposed place which is exposed to rain. Therefore, layout flexibility is improved. The USB port 52 may include an attachable and detachable cap. The external device is not limited to the smartphone, and may be a tablet, a navigation terminal, an audio device, an illumination device, a charger, or an external memory, for example.

Referring to Figs. 3 and 4, the USB port 52 includes the cap portion 54 serving as a mechanical joint for inserting and removing the USB plug 51 along a predetermined insertion-removal direction (indicated by an arrow W1 in the drawing), and the casing 55 that supports the cap portion 54 and is fixed to the vehicle body side (inner box 26).

The cap portion 54 has a flat hollow cross-sectional shape, for example, and extends along the insertion-removal direction W1.

The port opening 53 through which the USB plug 51 is inserted and removed is formed in an end portion on one end side (side on which the USB plug 51 is removed, hereinafter, referred to as a removal side) in the insertion-removal direction W1 in the cap portion 54. A plurality of terminals (refer to Figs. 6 and 7) facing the port opening 53 are arranged inside the cap portion 54. In order to suppress electric corrosion of the terminal in the environment exposed to the water, it is desirable to perform water repellent treatment on a metal terminal portion inside the port opening 53.

For example, the casing 55 is formed of an insulating resin, and has a rectangular parallelepiped outer shape that is long in the insertion-removal direction W1, for example. A cap holding portion 56 protruding toward the removal side along the insertion-removal direction W1 is formed in an end portion of the casing 55 on the removal side in the insertion-removal direction W1. A coupler 57 that can connect a vehicle body side harness routed to the vehicle body side is provided on the other end side (side into which the USB plug 51 is inserted, hereinafter, referred to as an insertion side) of the casing 55 in the insertion-removal direction W1. The USB port 52 may not include the cap portion 54. That is, the cap portion 54 configures a mechanical joint for inserting and removing the USB plug 51 along the insertion-removal direction W1. However, the cap portion 54 may be eliminated, and a resin-made joint may be configured in a portion of the casing 55 which corresponds to the cap holding portion 56.

The cap holding portion 56 is provided to cover an outer periphery of the cap portion 54. A tip portion of the cap holding portion 56 has a protruding portion 58 that protrudes toward the removal side from a tip portion (port opening 53) of the cap portion 54. The protruding portion 58 is provided in an annular shape to surround a whole outer periphery of the port opening 53. The protruding portion 58 is provided so that an inner peripheral edge overlaps a peripheral edge of the port opening 53 (in other words, to be adjacent to the peripheral edge of the port opening 53) when viewed in the insertion-removal direction W1.

A guide portion 58a inclined to widen a vehicle body side opening 31 toward the removal side in the insertion-removal direction W1 is provided on a tip side and an inner peripheral side of the protruding portion 58. The guide portion 58a functions as a guide portion that guides the USB plug 51 approaching from the removal side in the insertion-removal direction W1 to the port opening 53. A drainage hole 58b (refer to Fig. 4) that guides the water entering the inside of the protruding portion 58 downward of the protruding portion 58 is provided on a lower side of a base portion (end portion on the insertion side in the insertion-removal direction W1) of the protruding portion 58 when mounted on the vehicle. The drainage portion of the water inside the protruding portion 58 is not limited to the drainage hole 58b (drainage portion), and for example, a drainage groove or cutout may be provided.

Referring to Figs. 2 and 4, the USB port 52 is attached to a back wall 27 of the inner box 26, for example. In the USB port 52, the port opening 53 and the protruding portion 58 are exposed inside the inner box 26 through the vehicle body side opening 31 formed on the back wall 27. In the USB port 52, the port opening 53 and the protruding portion 58 face an internal space K2 of the inner box 26. The remaining portion of the USB port 52 excluding the port opening 53 and the protruding portion 58 faces a space K3 (internal space of the leg shield 14) in front of the back wall 27. That is, the USB port 52 is shielded by the back wall 27 except for the port opening 53 and the protruding portion 58 when the inside of the inner box 26 is viewed in a completed vehicle state of the motorcycle 1.

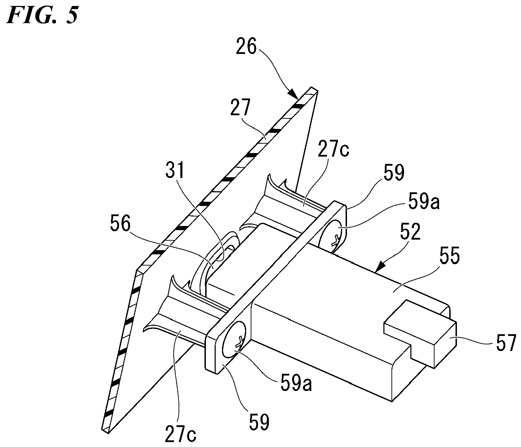

Referring to Figs. 3 and 5, on the removal side of the casing 55 in the insertion-removal direction W1, a pair of attachment flanges 59 (attachment portions) is provided on both sides in a width direction (rightward-leftward direction when mounted on the vehicle) intersecting the insertion-removal direction W1. On a front surface side (side facing the inside of the leg shield 14) of the back wall 27, a pair of fastening bosses 27c is provided on both right and left sides of the vehicle body side opening 31. A pair of attachment flanges 59 is fastened and fixed to the pair of fastening bosses 27c by respectively using screws 59a screwed from the front. In this manner, the USB port 52 is fixed and attached to a front surface side (internal space K3 side of the leg shield 14) of the back wall 27.

In the USB port 52, a circuit board 62 (refer to Figs. 6 and 7) connected to a terminal inside the cap portion 54 is provided inside the casing 55. The circuit board 62 includes a DC-DC converter, for example. The circuit board 62 is disposed along upper and lower surfaces of the casing 55 when mounted on the vehicle, and is accommodated inside the casing 55. In a state where the circuit board 62 is accommodated inside the casing 55, the USB port 52 seals the circuit board 62 in a watertight manner by injecting a potting resin from a case opening portion and filling the inside of the casing 55 with the potting resin.

Referring to Fig. 4, most of the USB port 52 is disposed in front of the back wall 27 (back side of the back wall 27, the internal space K3 side of the leg shield 14). The USB port 52 is shielded by the back wall 27 except for the port opening 53 and the protruding portion 58.

The cap portion 54 inside the protruding portion 58 is located behind a tip of the protruding portion 58. Accordingly, even when the USB plug 51 is inserted to but against the USB port 52, an abutting load is not directly transferred to the cap portion 54. The casing 55 is fixed to the back wall 27 on the vehicle body side. Accordingly, when the above-described abutting load is input to the protruding portion 58, the abutting load is supported on the back wall 27, that is, the vehicle body side. Therefore, the load input to the cap portion 54 of the USB port 52 is suppressed, and the protection performance around the terminal is improved. In addition, even in a case where an insertion position of the USB plug 51 is misaligned when viewed in the insertion-removal direction W1, the USB plug 51 abuts against the protruding portion 58. Therefore, the load input to the cap portion 54 is suppressed.

As described above, the USB port structure for the saddle riding-type vehicle according to the present embodiment includes the USB port 52 for inserting and removing the USB plug 51 of the external device along the predetermined insertion-removal direction W1. The USB port 52 includes the casing 55 in which the attachment flange 59 for attaching the USB port 52 to the vehicle body side is provided. The casing 55 includes the protruding portion 58 that protrudes to the removal side in the insertion-removal direction W1 from the port opening 53 through which the USB plug 51 is inserted and removed.

According to this configuration, in a case where the position of inserting the USB plug 51 of the external device into the port opening 53 of the USB port 52 is misaligned, the inserted USB plug 51 is stopped by abutting against the protruding portion 58 of the casing 55 instead of the port opening 53. Therefore, even when the USB plug 51 is pushed and inserted into the USB port 52, the load acting on the insertion side in the insertion-removal direction W1 is input to the vehicle body side via the casing 55. Therefore, when the USB plug 51 is inserted, the load input to the terminal periphery of the USB port 52 is suppressed, and the protection performance of the USB port 52 can be improved.

In the USB port structure for the above-described saddle riding-type vehicle, the protruding portion 58 is provided to surround the outer periphery of the port opening 53.

According to this configuration, the protruding portion 58 is likely to disperse and receive the insertion load of the USB plug 51, and is likely to withstand the large load input. Therefore, the protection performance of the USB port 52 can be further improved.

In the USB port structure for the above-described saddle riding-type vehicle, the protruding portion 58 is provided to be adjacent to the peripheral edge of the port opening 53 when viewed in the insertion-removal direction W1. The inner peripheral side of the protruding portion 58 includes the guide portion 58a formed to be separated farther from the peripheral edge of the port opening 53 as the protruding portion 58 is closer to the removal side in the insertion-removal direction W1.

According to this configuration, when the USB plug 51 is inserted into the port opening 53, the guide portion 58a guides the USB plug 51 toward the port opening 53 if the USB plug 51 is moved close to the port opening 53. Therefore, the USB plug 51 can be easily inserted.

In the USB port structure for the above-described saddle riding-type vehicle, in the end portion on the insertion side in the insertion-removal direction W1, the protruding portion 58 includes the drainage hole 58b which guides the water entering the inside of the protruding portion 58 to the outside of the protruding portion 58.

According to this configuration, the water is prevented from accumulating inside the protruding portion 58, and the water is less likely to enter the inside of the port opening 53. In this manner, a waterproof property of the USB port 52 can be improved.

The present invention is not limited to the above-described embodiment. For example, the saddle riding-type vehicle includes all vehicles on which the driver rides by straddling the vehicle body. The saddle riding-type vehicle includes not only a motorcycle (including motorized bicycle and scooter-type vehicle), but also a three-wheeled vehicle (including a front two-wheeled vehicle and a rear one-wheeled vehicle in addition to a front one-wheeled and rear two-wheeled vehicle) or a four-wheeled vehicle.

In the present embodiment, an example has been described in which the USB port having the power supply function and the communication function is installed in the saddle riding-type vehicle. However, without being limited thereto, the present invention may be applied to a case where the USB port having the power supply function or the communication function is installed in the saddle riding-type vehicle. That is, the USB port is a terminal unit through which both the connection terminal having the power supply function and the communication function in the external device and the connection terminal having the power supply function or the communication function in the external device can be inserted and removed.

### [Reference Signs List]

1: motorcycle (saddle riding-type vehicle)
50: USB connector
51: USB plug (connection terminal)
52: USB port (USB terminal unit)
53: port opening (terminal connection port)
55: casing
58: protruding portion
58a: guide portion
58b: drainage hole (drainage portion)
59: attachment flange (attachment portion)
W1: insertion-removal direction

## Claims

1. A USB terminal unit structure for a saddle riding-type vehicle, comprising:
a USB terminal unit (52) which has at least one of a power supply function and a communication function, and through which a connection terminal (51) of an external device is insertable and removable along a predetermined insertion-removal direction (W1),
wherein the USB terminal unit (52) includes a casing (55) in which an attachment portion (59) to a vehicle body side is provided,
wherein the casing (55) includes a protruding portion (58) which protrudes toward a removal side in the insertion-removal direction (W1) from a terminal connection port (53) into and from which the connection terminal (51) is insertable and removable,
wherein the attachment portion (59) is a pair of attachment flanges (59) provided on the removal side in the insertion-removal direction (W1) of the casing (55) and on both sides in a width direction of the casing (55) which is substantially orthogonal to the insertion-removal direction (W1), and
wherein the protruding portion (58) is provided to surround an outer periphery of the terminal connection port (53),
**characterized in that**
in an end portion on an insertion side in the insertion-removal direction (W1), the protruding portion (58) includes a drainage portion (58b) which guides water entering an inside of the protruding portion (58) to an outside of the protruding portion (58).

2. The USB terminal unit structure for a saddle riding-type vehicle according to Claim 1,
wherein the protruding portion (58) is provided to be adjacent to a peripheral edge of the terminal connection port (53) when viewed in the insertion-removal direction (W1), and
wherein an inner peripheral side of the protruding portion (58) includes a guide portion (58a) formed to be separated farther from the peripheral edge of the terminal connection port (53) toward the removal side in the insertion-removal direction (W1).

## Patentansprüche

1. USB-Anschlusseinheitsstruktur für ein Sattelfahrzeug, die aufweist:
eine USB-Anschlusseinheit (52), die wenigstens eine Stromversorgungsfunktion und eine Kommunikationsfunktion hat, und über die ein Verbindungsanschluss (51) einer externen Vorrichtung entlang einer vorbestimmten Einsetz-Entfernungs-Richtung (W1) einsetzbar und entfernbar ist,
wobei die USB-Anschlusseinheit (52) ein Gehäuse (55) aufweist, in dem ein Anbringungsbereich (59) an einer Fahrzeugkarosserieseite vorgesehen ist,
wobei das Gehäuse (55) einen hervorstehenden Bereich (58) aufweist, der in Richtung einer Entfernungsseite in der Einsetz-Entfernungs-Richtung (W1) von einem Anschlussverbindungsbereich (53), in den und aus dem der Verbindungsanschluss (51) einsetzbar und entfernbar ist, hervorsteht,
wobei
der Anbringungsbereich (59) ein Paar von Anbringungsflanschen (59) ist, die an der Entfernungsseite in der Einsetz-Entfernungs-Richtung (W1) des Gehäuses und an beiden Seiten in einer Breitenrichtung des Gehäuses (55), das im Wesentlichen orthogonal zur Einsetz-Entfernungs-Richtung (W1) ist, vorgesehen sind, und
wobei der hervorstehende Bereich (58) vorgesehen ist, um einen Außenumfang der Anschlussverbindungsöffnung (53) zu umgeben,
**dadurch gekennzeichnet, dass**
der hervorstehende Bereich (58) in einem Endbereich an einer Einsetzseite in der Einsetz-Entfernungs-Richtung (W1) einen Drainagebereich aufweist, der das an einer Innenseite des hervorstehenden Bereichs (58) eintretende Wasser zu einer Außenseite des hervorstehenden Bereichs (58) führt.

2. USB-Anschlusseinheitsstruktur für ein Sattelfahrzeug nach Anspruch 1,
wobei der hervorstehende Bereich (58) vorgesehen ist, um in einer Einsetz-Entfernungs-Richtung (W1) betrachtet zu einer Umfangskante der Anschlussverbindungsöffnung (53) benachbart zu sein, und
wobei eine Innenumfangsseite des hervorstehenden Bereichs (58) einen Führungsbereich (58a) aufweist, der ausgebildet ist, um weiter von der Umfangskante des Anschlussverbindungsbereichs (53) in Richtung der Entfernungsseite der Einsetz-Entfernungs-Richtung (W1) ausgebildet zu sein.

## Revendications

1. Structure d'unité de borne USB pour un véhicule du type à selle, comprenant :
une unité de borne USB (52) qui a au moins l'une d'une fonction d'alimentation électrique et d'une fonction de communication, et à travers laquelle une borne de connexion (51) d'un dispositif externe peut être insérée et retirée le long d'une direction d'insertion-retrait (W1) prédéterminée,
dans laquelle l'unité de borne USB (52) comporte un boîtier (55) dans lequel une partie de fixation (59) à un côté de carrosserie de véhicule est prévue,
dans laquelle le boîtier (55) comporte une partie en saillie (58) qui fait saillie vers un côté de retrait dans la direction d'insertion-retrait (W1) à partir d'un port de connexion de borne (53) dans lequel et à partir duquel la borne de connexion (51) peut être insérée et retirée,
dans laquelle la partie de fixation (59) est une paire de brides de fixation (59) prévues sur le côté de retrait dans la direction d'insertion-retrait (W1) du boîtier (55) et sur les deux côtés dans la direction de la largeur du boîtier (55) qui est sensiblement orthogonale à la direction d'insertion-retrait (W1), et
dans laquelle la partie en saillie (58) est prévue pour entourer une périphérie extérieure du port de connexion de borne (53),
**caractérisée en ce que**
dans une partie d'extrémité sur un côté d'insertion dans la direction d'insertion-retrait (W1), la partie en saillie (58) comporte une partie de drainage (58b) qui guide l'eau entrant à l'intérieur de la partie en saillie (58) vers un extérieur de la partie en saillie (58).

2. Structure d'unité de borne USB pour un véhicule du type à selle selon la revendication 1,
dans laquelle la partie en saillie (58) est prévue pour être adjacente à un bord périphérique du port de connexion de borne (53) lorsqu'elle est vue dans la direction d'insertion-retrait (W1), et
dans laquelle un côté périphérique intérieur de la partie en saillie (58) comporte une partie de guidage (58a) formée pour être séparée plus loin du bord périphérique du port de connexion de borne (53) vers le côté de retrait dans la direction d'insertion-retrait (W1).
